# EUROPEAN PATENT APPLICATION

(11) **EP 4 737 153 A1**
(43) Date of publication of application: **06.05.2026**
(21) Application number: 24209407.6
(22) Date of filing: 29.10.2024
(51) Int. Cl.: B60K 1/04

(54) **BATTERY SUSPENSION ARRANGEMENT WITH DIAGONALLY ARRANGED BUSHINGS**

(71) Applicant: Volvo Truck Corporation, 405 08 Göteborg (SE)
(72) Inventor: LANDVIK, Sondre, 417 61 GÖTEBORG (SE); NAWKHARE, Nilesh Ravindra, 418 42 GÖTEBORG (SE); ALBERT, Ioana, 417 27 GÖTEBORG (SE)
(74) Representative: Kransell & Wennborg KB

(57) **Abstract**

The present disclosure relates to a battery suspension arrangement comprising a pair of triangularly shaped battery suspension brackets spaced apart from each other, wherein a first battery supporting bushing of a first one of the pair of triangularly shaped battery suspension brackets facing in a direction towards a second one of the pair of triangularly shaped battery suspension brackets, and wherein a second battery supporting bushing of the second one of the pair of triangularly shaped battery suspension brackets facing in a direction towards the first one of the pair of triangularly shaped battery suspension brackets.

## Description

### TECHNICAL FIELD

The disclosure relates generally to suspension of traction batteries. In particular aspects, the disclosure relates to a battery suspension arrangement with diagonally arranged bushings. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged arrange these traction batteries to obtain beneficial load distribution.

### SUMMARY

According to a first aspect of the disclosure, there is provided a battery suspension arrangement for a vehicle, the battery suspension arrangement comprising a pair of triangularly shaped battery suspension brackets spaced apart from each other, each one of the triangularly shaped battery suspension brackets comprising a first, second and third portion, an elongated vertical member extending from the first portion to the second portion, an elongated horizontal member extending from the first portion to the third portion, and an elongated slanted member extending from the second portion to the third portion, each of the triangularly shaped battery suspension brackets being connectable to a frame of the vehicle at the second portion, wherein each of the triangularly shaped battery suspension brackets comprises a first and second battery supporting bushing arranged on the respective elongated horizontal member between the first and third portions, wherein the first battery supporting bushing is arranged closer to the first portion, and facing in an opposite direction, compared to the second battery supporting bushing, wherein the first battery supporting bushing of a first one of the pair of triangularly shaped battery suspension brackets facing in a direction towards a second one of the pair of triangularly shaped battery suspension brackets, and wherein the second battery supporting bushing of the second one of the pair of triangularly shaped battery suspension brackets facing in a direction towards the first one of the pair of triangularly shaped battery suspension brackets.

The first aspect of the disclosure may seek to at least partly solve the problem of insufficient mechanical suspension of traction batteries to the frame of a vehicle. A technical benefit may include that forces caused by twisting of the frame may not be transmitted to the traction batteries. In detail, by connecting the traction battery to the first bushing, i.e. to an inner bushing, of one of the brackets, as well as to the second bushing, i.e. to an outer bushing, of another one of the brackets, torque and forces caused by frame twisting may not be transmitted to the traction battery, or transmitted at a significantly reduced magnitude. By providing the brackets and bushing as described above, a pseudo-three-point suspension may be provided for the traction battery which allows for improved decoupling from frame twisting compared to e.g. a four-point suspension.

In addition, the battery suspension arrangement may enable for simplified connection and disconnection of the traction battery as a low number of connecting portions for the traction battery to the battery suspension arrangement is provided. Hence, assembly of the traction batteries to the battery suspension arrangement can be performed in a more rapid manner. In a similar vein, maintenance and replacement of the traction battery can also be performed more rapidly. Further, the triangularly shaped brackets further enables for improved crash protection of a traction battery connected to the battery suspension arrangement. In detail, the forces from a side collision may be transmitted to the frame of the vehicle without substantially affecting the traction battery suspended by the battery suspension arrangement.

The triangularly shaped battery suspension brackets should be construed as three-sided brackets and the first, second and third portions may preferably be construed as the edges of such triangular. Hence, the elongated vertical member, the elongated horizontal member and the elongated slanted member may form the sides of the triangle. According to an example, the second portion may be an upper portion of each of the triangularly shaped brackets. In such example, the brackets thus hang to the frame at an upper end of the brackets, whereby the elongated vertical member extends downward from the second portion to the first portion, and the elongated slanted member extends transversally downwards from the second portion to the third portion. The traction battery may hereby be protected and housed by the elongated vertical member, the elongated horizontal member and the elongated slanted member in a longitudinal direction.

Optionally in some examples, including in at least one preferred example, the second portion of each one of the pair of triangularly shaped battery suspension brackets comprises a frame connecting structure for connecting the respective triangularly shaped battery suspension brackets to the frame. A technical benefit may include enhanced stability and secure attachment, as the frame connecting structure may allow for a precise and robust connection between the battery suspension brackets and the vehicle frame, improving durability under load.

Optionally in some examples, including in at least one preferred example, each one of the triangularly shaped suspension brackets is formed as a right triangle. A technical benefit may include simplified manufacturing and assembly, as forming each suspension bracket as a right triangle may ensure uniformity, improving ease of alignment during installation and contributing to consistent structural performance.

Optionally in some examples, including in at least one preferred example, the pair of triangularly shaped battery suspension brackets are of same size and/or shape. A technical benefit may include a balanced load distribution, as using brackets of the same size and/or shape may ensure symmetry in force application, which may lead to even wear and reduced stress on individual components, thereby prolonging the lifespan of the battery suspension arrangement.

Optionally in some examples, including in at least one preferred example, each one of the triangularly shaped suspension brackets is made of cast iron. A technical benefit may include increased durability and strength, since cast iron is a robust material with high resistance to wear and fatigue, particularly suited to heavy-duty applications in vehicles. Also, the strength of cast iron may protect the traction batteries from impact loads during e.g. a side collision.

Optionally in some examples, including in at least one preferred example, the battery suspension arrangement further comprises a first and second elongated frame, each one of the first and second elongated frames comprises a battery support surface, wherein the battery support surface of the first and second elongated frame are configured to suspend a first traction battery. A technical benefit may include additional support for the traction battery, as the elongated frames with battery support surfaces may provide a stable base for suspending the traction batteries, thereby further reducing vibration and movement during operation, which can extend the operational lifetime of the traction battery.

Optionally in some examples, including in at least one preferred example, the first elongated frame is suspended to the first triangularly shaped battery suspension bracket by the first battery supporting bushing of the first triangularly shaped battery suspension bracket, and the second elongated frame is suspended to the second triangularly shaped battery suspension bracket by the second battery supporting bushing of the second triangularly shaped battery suspension bracket. A technical benefit may include efficient load transfer, as suspending the elongated frames using the battery supporting bushings may allow for improved load distribution and reduced vibrations, which in turn reduces strain on the respective first and second elongated frames.

Optionally in some examples, including in at least one preferred example, the battery suspension arrangement further comprises a first protection plate bracket, the first protection plate bracket comprising a first portion, a second portion and a third portion, wherein the first protection plate bracket comprises an elongated vertical member extending from the first portion to the second portion, and an elongated horizontal member extending from the second portion to the third portion, wherein the first portion is attached to the third portion of the first triangularly shaped battery suspension bracket and the third portion is attached to the elongated slanted member of the first triangularly shaped battery suspension bracket. A technical benefit may include that a protection plate can be attached to the first protection plate bracket in such manner that an external load exposed to the protection plate, during e.g. a side collision, can be transmitted through the first protection plate bracket and into the frame of the vehicle via the first triangularly shaped battery suspension bracket. The traction battery can hereby be well protected from damage.

Optionally in some examples, including in at least one preferred example, the first protection plate bracket comprises a bushing arrangement configured to suspend a protection plate to the first protection plate bracket, the bushing arrangement being arranged at the second portion of the first protection plate bracket. A technical benefit may include improved vibration isolation, as the bushing arrangement may help to absorb shocks, reducing stress on the protection plate and other components, which minimizes the risk of damage during operation.

Optionally in some examples, including in at least one preferred example, the first protection plate bracket comprises a cavity, the bushing arrangement being arranged in the cavity. A technical benefit may include additional structural protection, as the cavity may enable for encapsulation of the bushing arrangement, preventing the bushing arrangement from being exposed to environmental elements and wear, thereby improving an overall durability.

Optionally in some examples, including in at least one preferred example, the bushing arrangement comprises a first part arranged in, and rotationally fixed to, the bracket cavity, the first part comprising a central cavity, a second part arranged in the central cavity, and a third part arranged in the second part, wherein the third part comprises an aperture configured to receive a fastener element for connecting the protection plate to the first protection plate bracket. A technical benefit may include that a less stiff interface can be obtained where the bushing arrangement may allow for a relative movement between the protection plate and the frame of the vehicle when the first protection plate bracket is connected to the first triangularly shaped battery suspension bracket and to the protection plate. In turn, a reduction of joint forces may be obtained. The reduced joint forces will in turn reduce stresses in the frame of the vehicle as well as stresses in the traction battery since forces from the frame of the vehicle will, more or less, not be transferred to the traction battery. Also, the first, second and third parts should preferably be construed as three separate parts, wherein the second part may be rotationally fixed to the first part.

Optionally in some examples, including in at least one preferred example, the first part of the bushing arrangement comprises a first abutment portion arranged in abutment with a bracket abutment portion of the bracket cavity. A technical benefit may include secure connection of the first part to the bushing cavity via the first abutment portion and the bracket abutment portion, preventing the first part from rotating within the bracket cavity.

Optionally in some examples, including in at least one preferred example, the elongated vertical member and the elongated horizontal member of the first protection plate bracket are arranged at right angle relative to each other. A technical benefit may include improved rigidity and alignment, as the right-angle arrangement of the vertical and horizontal members may enhance the structural stability of the protection plate bracket, ensuring that the protection plate bracket remains securely in place during vehicle operation.

Optionally in some examples, including in at least one preferred example, the battery suspension arrangement further comprises a third triangularly shaped battery suspension bracket spaced apart from the second one of the pair of triangularly shaped battery suspension brackets such that the second one of the pair of triangularly shaped battery suspension brackets is arranged between the first one of the pair of triangularly shaped battery suspension brackets and the third triangularly shaped battery suspension bracket. A technical benefit may include that an additional traction battery, i.e. a second traction battery can be connected to the battery suspension arrangement, improving the operating range of the vehicle. In addition, increased load distribution and stability may be provided, as the third triangularly shaped bracket may assist to further support the traction batteries, ensuring more even distribution of weight and reducing strain on the other suspension brackets.

Optionally in some examples, including in at least one preferred example, the third triangularly shaped battery suspension bracket comprises a first, second and third portion, an elongated vertical member extending from the first portion to the second portion, an elongated horizontal member extending from the first portion to the third portion, and an elongated slanted member extending from the second portion to the third portion, the third triangularly shaped battery suspension bracket being connectable to the frame of the vehicle at the second portion. A technical benefit may include optimized attachment points and enhanced structural reinforcement, as the third triangularly shaped battery suspension bracket may add additional stability to the system by providing a robust connection to the frame.

Optionally in some examples, including in at least one preferred example, the third triangularly shaped battery suspension bracket comprises a first and second battery supporting bushing arranged on the elongated horizontal member between the first and third portions, wherein the first battery supporting bushing is arranged closer to the first portion, and facing in an opposite direction, compared to the second battery supporting bushing. A technical benefit may include improved load management, as the arrangement of the battery supporting bushings can assist in the balance of forces, reducing the risk of misalignment and wear on individual components.

Optionally in some examples, including in at least one preferred example, the first battery supporting bushing of the second one of the pair of triangularly shaped battery suspension brackets faces in a direction towards third triangularly shaped battery suspension bracket, and wherein the second battery supporting bushing of the third triangularly shaped battery suspension bracket faces in a direction towards the second one of the pair of triangularly shaped battery suspension brackets. A technical benefit may include that a pseudo-three-point suspension may be provided for the traction battery which allows for improved decoupling from frame twisting. Further, and as described above, forces caused by twisting of the frame may not be transmitted to the traction batteries.

Optionally in some examples, including in at least one preferred example, the pair of triangularly shaped battery suspension brackets being a first pair of triangularly shaped battery suspension brackets, the battery suspension arrangement further comprising a second pair of triangularly shaped battery suspension brackets spaced apart from each other, wherein the first and second pair triangularly shaped battery suspension brackets being connectable to a respective longitudinally extending frame rail of the frame of the vehicle. A technical benefit may include improved force counterbalancing. Further, symmetry may be obtained as seen in the longitudinal direction of the vehicle thereby improving load distribution. Further, an additional support with two bushings also on second pair of triangularly shaped battery suspension brackets can hereby be obtained which may provide for a further rigid and stable battery suspension arrangement, particularly when connecting a single large traction battery to the first and second pair of triangularly shaped battery suspension brackets.

According to a second aspect, there is provided an energy storage arrangement, comprising a traction battery and a battery suspension arrangement of any one of the examples described above in relation to the first aspect, wherein the traction battery is supported by the pair of triangularly shaped battery suspension brackets.

Effects and features of the second aspect are largely analogous to those described above in relation to the first aspect.

According to a third aspect, there is provided a vehicle comprising the battery suspension arrangement of any one of the examples described above in relation to the first aspect, or the energy storage arrangement of the third aspect.

Effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an energy storage arrangement connected to a frame of the vehicle according to an example,
Fig. 3 is an exemplary illustration of a battery suspension arrangement according to an example,
Fig. 4 is an exemplary illustration of a battery suspension arrangement according to an example,
Fig. 5 is an exemplary illustration of a protection plate bracket according to an example,
Figs. 6 - 8 are exemplary detailed illustrations of the protection plate bracket according to an example, and
Fig. 9 is an exemplary illustration of a guiding element connected to the protection plate according to an example.

### DETAILED DESCRIPTION

The detailed description set forth below provides information and examples of the disclosed technology with sufficient detail to enable those skilled in the art to practice the disclosure.

The present disclosure aims at solving the problem of insufficient mechanical suspension of traction batteries to the frame of a vehicle. A technical benefit may include, amongst other aspects, that forces caused by twisting of the frame may not be transmitted to the traction batteries.

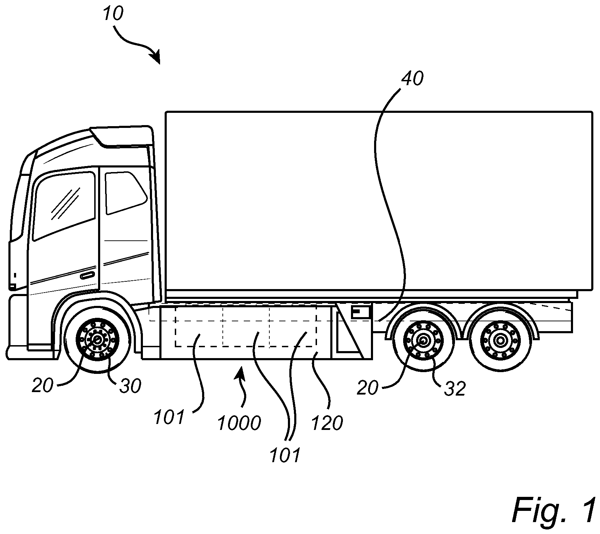

Reference is made to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft. The at least one electric traction motor 20 is configured to apply a propulsive power to the wheels of the vehicle during propulsion, and to generate electric power during braking.

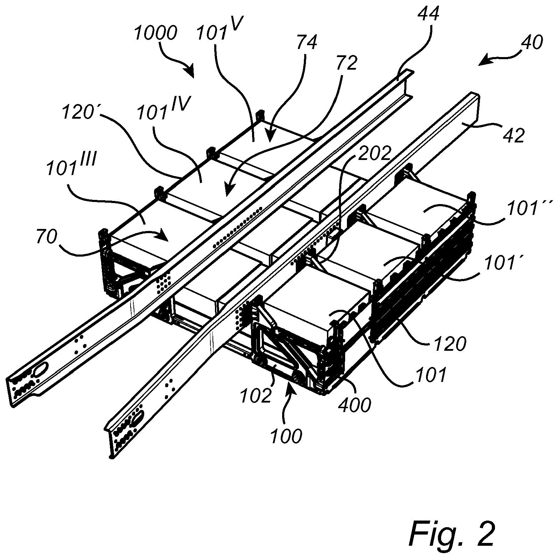

The vehicle further comprises an energy storage arrangement 100, which may also be referred to as a high-voltage vehicle battery. The energy storage arrangement 1000 is exemplified as comprising a plurality of energy storage modules, also referred to as battery modules or traction batteries, and are in Fig. 1 exemplified as three energy storage modules. The energy storage modules will in the following be referred to as traction batteries 101. The energy storage modules 101 are each provided with one or more battery cells. The energy storage arrangement 1000 is configured to feed electric power to the electric traction motor 20 during propulsion of the vehicle 10 and to receive electric power during braking. The vehicle 10 comprises a protection plate 120 at a lateral outer end position of the energy storage arrangement 1000 to protect the relatively vulnerable energy storage arrangement 1000 against external loads. As will be evident from the below description, the energy storage arrangement 1000 is connected to the frame 40 of the vehicle 10 by a frame structure. In order to describe the suspension of the energy storage arrangement 1000 to the frame 40 of the vehicle 10, reference is now made to Fig. 2.

Turning to Fig. 2 which is an exemplary illustration of an energy storage arrangement 1000 connected to the frame 40 of the vehicle 10 according to an example. In the exemplification depicted in Fig. 2, the frame 40 comprises a pair of longitudinally extending frame rails 42, 44. In detail, the frame 40 comprises a first 42 and a second 44 frame rail extending in the longitudinal direction of the vehicle 10 and are transversally offset from each other. As is further illustrated in Fig. 2 and as indicated above, the energy storage arrangement 1000 comprises a plurality of traction batteries 101, 101^{I}, 101^{II}, 101 ^{III}, 101^{IV} 101^{v} traction batteries. Hence, the non-limiting example of the energy storage arrangement 1000 comprises six traction batteries, of which three traction batteries 101, 101^{I}, 101^{II} are arranged and suspended to the first longitudinally extending frame rail 42, while a remaining three traction batteries 101^{III}, 101^{IV} 101^{V} are arranged and suspended to the first longitudinally extending frame rail 42. As can be seen in Fig. 2, each traction battery is arranged in an L-shape. Hence, the example is suspending the six L-shaped traction batteries using three cradles 70, 72, 74 spanning transverse of the vehicle frame 40. Suspending two batteries together in each cradle may result in a higher mass per suspended mass, thus lowering the acceleration levels on the battery packs, and sensitive electronic components.

Furthermore, the energy storage arrangement 1000 comprises a battery suspension arrangement 100 for suspending the traction batteries to the frame 40 of the vehicle 10. The battery suspension arrangement 100 comprises triangularly shaped battery suspension brackets 102, 202 as well as protection plate brackets 400. In addition, the energy storage arrangement 1000 comprises the above described protection plate 120. In detail, the energy storage arrangement 1000 comprises a first 120 and a second 120' protection plate, each arranged at a respective lateral end of the energy storage arrangement 1000. The protection plate 120 may preferably be connected to the triangularly shaped battery suspension brackets 102, 202 via the protection plate brackets 400.

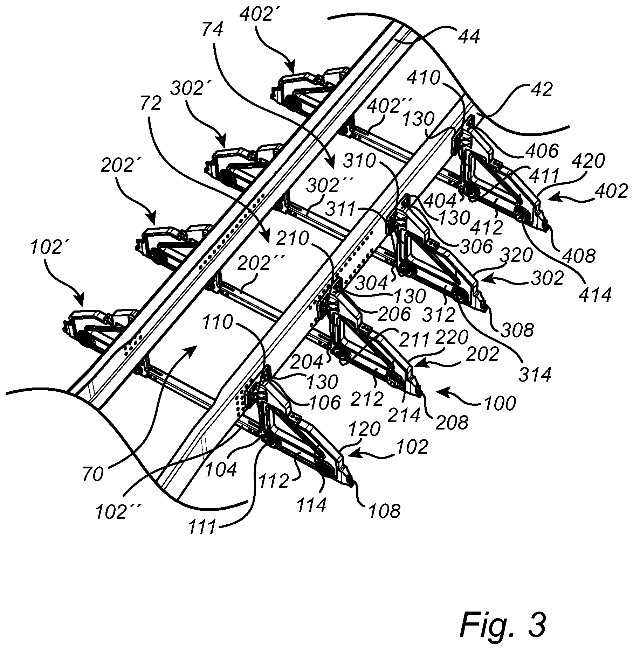

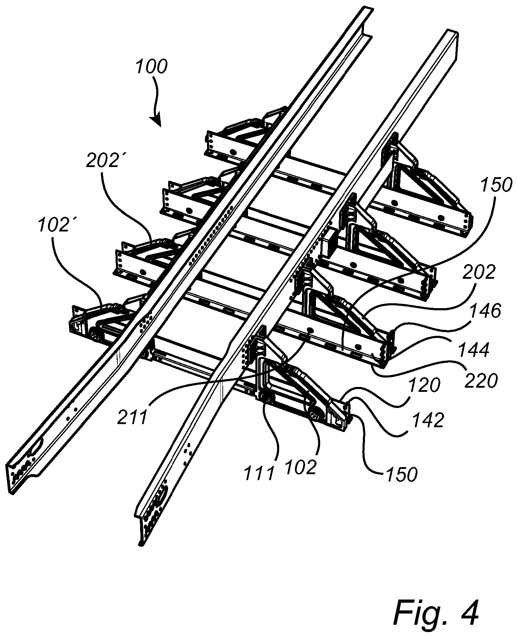

In order to describe the battery suspension arrangement 100 in further detail, reference is now made to Figs. 3 and 4 which are exemplary illustrations of the battery suspension arrangement 100 according to an example. As can be seen in Fig. 3, the battery suspension arrangement 100 comprises a first 102 and a second 202 triangularly shaped battery suspension bracket. The first 102 and second 202 triangularly shaped battery suspension brackets are connected to the first longitudinally extending frame rail 42 of the vehicle 10. The exemplified battery suspension arrangement 100 also comprises a third 302 and a fourth 402 triangularly shaped battery suspension bracket, however, the following will mainly focus on the description of the first 102 and second 202 triangularly shaped battery suspension brackets. As can also be seen in Fig. 3, the exemplified battery suspension arrangement 100 further comprises a first 102', second 202', third 302' and fourth 402' triangularly shaped battery suspension bracket which are all connected to the second longitudinally extending frame rail 44. Hence, the first triangularly shaped battery suspension bracket 102 and the additional first triangularly shaped battery suspension bracket 102' are arranged on opposite lateral sides of the frame 40 and arranged on similar longitudinal position. The first triangularly shaped battery suspension bracket 102 and the additional first triangularly shaped battery suspension bracket 102' may be connected to each other by means of a first beam 102". In a similar vein, the second triangularly shaped battery suspension bracket 202 and the additional second triangularly shaped battery suspension bracket 202' may be connected to each other by means of a second beam 202", the third triangularly shaped battery suspension bracket 302 and the additional third triangularly shaped battery suspension bracket 302' may be connected to each other by means of a third beam 302", and the fourth triangularly shaped battery suspension bracket 402 and the additional fourth triangularly shaped battery suspension bracket 402' may be connected to each other by means of a fourth beam 402".

The first triangularly shaped battery suspension bracket 102 and the additional first triangularly shaped battery suspension bracket 102', together with the second triangularly shaped battery suspension bracket 202 and the additional second triangularly shaped battery suspension bracket 202' hereby form a first cradle 70 for a pair of traction batteries. The second triangularly shaped battery suspension bracket 202 and the additional second triangularly shaped battery suspension bracket 202', together with the third triangularly shaped battery suspension bracket 302 and the additional third triangularly shaped battery suspension bracket 302' form a second cradle 72 for a pair of traction batteries. In a similar vein, the third triangularly shaped battery suspension bracket 302 and the additional third triangularly shaped battery suspension bracket 302', together with the fourth triangularly shaped battery suspension bracket 402 and the additional fourth triangularly shaped battery suspension bracket 402' form a third cradle 74 for a pair of traction batteries. The second triangularly shaped battery suspension bracket 202 is longitudinally spaced apart from the first triangularly shaped battery suspension bracket 102, the third triangularly shaped battery suspension bracket 302 is longitudinally spaced apart from the second triangularly shaped battery suspension bracket 202, and the fourth triangularly shaped battery suspension bracket 402 is longitudinally spaced apart from the third triangularly shaped battery suspension bracket 302. Hence, the first 102 and fourth 402 triangularly shaped battery suspension brackets are arranged at longitudinal ends of the battery suspension arrangement 100, while the second 202 and third 302 triangularly shaped battery suspension brackets are arranged longitudinally between the first 102 and fourth 402 triangularly shaped battery suspension brackets.

Reference is now initially made to the first 102 and second 202 triangularly shaped battery suspension brackets. The first triangularly shaped battery suspension bracket 102 comprises a first portion 104, a second portion 106 and a third portion 108. The first 104, second 106 and third 108 portions are edge portions of the first triangularly shaped battery suspension bracket 102. The first triangularly shaped battery suspension bracket 102 further comprises an elongated vertical member 110, an elongated horizontal member 112 as well as an elongated slanted member 114. The elongated vertical member 110 extends vertically from the first portion 104 to the second portion 106, the elongated horizontal member 112 extends horizontally from the first portion 104 to the third portion 108. The elongated slanted member 114 extends vertically and horizontally from the second portion 106 to the third portion 108.

In a similar vein, the second triangularly shaped battery suspension bracket 202 comprises a first portion 204, a second portion 206 and a third portion 208. The first 204, second 206 and third 208 portions are edge portions of the second triangularly shaped battery suspension bracket 202. The second triangularly shaped battery suspension bracket 202 further comprises an elongated vertical member 210, an elongated horizontal member 212 as well as an elongated slanted member 214. The elongated vertical member 210 extends vertically from the first portion 204 to the second portion 206, the elongated horizontal member 212 extends horizontally from the first portion 204 to the third portion 208. The elongated slanted member 214 extends vertically and horizontally from the second portion 206 to the third portion 208.

Referring back to the first triangularly shaped battery suspension bracket 102. As can be seen in Fig. 3, the first triangularly shaped battery suspension bracket 102 comprises a first battery supporting bushing 111 and a second battery supporting bushing 120. The first 111 and second 120 battery supporting bushings are arranged on the elongated horizontal member 112 between the above described first 104 and third 108 portions. The first 111 and second 120 battery supporting bushings are spaced apart from each other, where the first battery supporting bushing 111 is arranged closer to the first portion 104 compared to second battery supporting bushing 120. The first 111 and second 120 battery supporting bushings are arranged on opposite sides of the first triangularly shaped battery suspension bracket 102 as seen in the longitudinal direction of the vehicle 10. In the exemplification of Fig. 3, the first battery supporting bushing 111 face the second triangularly shaped battery suspension bracket 202, while the second battery supporting bushing 120 face away from the second triangularly shaped battery suspension bracket 202. It should however be readily understood that the first battery supporting bushing 111 may face away from the second triangularly shaped battery suspension bracket 202 and the second battery supporting bushing 120 may face the second triangularly shaped battery suspension bracket 202.

Further, the second triangularly shaped battery suspension bracket 202 also comprises a first battery supporting bushing 211 and a second battery supporting bushing 220. The first 211 and second 220 battery supporting bushings are arranged on the elongated horizontal member 212 between the above described first 204 and third 208 portions of the second triangularly shaped battery suspension bracket 202. The first 211 and second 220 battery supporting bushings are spaced apart from each other, where the first battery supporting bushing 211 is arranged closer to the first portion 204 compared to second battery supporting bushing 220. The first 211 and second 220 battery supporting bushings are arranged on opposite sides of the second triangularly shaped battery suspension bracket 202 as seen in the longitudinal direction of the vehicle 10. In the exemplification of Fig. 3, the first battery supporting bushing 211 face the third triangularly shaped battery suspension bracket 302, while the second battery supporting bushing 220 face the first triangularly shaped battery suspension bracket 102. It should however be readily understood that the first battery supporting bushing 211 may face the first triangularly shaped battery suspension bracket 102 and the second battery supporting bushing 220 may face the third triangularly shaped battery suspension bracket 302.

Moreover, each one of the first 102 and second 202 triangularly shaped battery suspension brackets also comprises a frame connecting structure 133. The frame connecting structure 133 may comprise through holes for connecting the respective triangularly shaped battery suspension brackets to the frame 40. For example, bolts, screws or rivets may be used for attaching the frame connecting structure 133 to the frame 40 via corresponding through holes in the frame 40.

Furthermore, the above described third triangularly shaped battery suspension bracket 302 comprises a first portion 304, a second portion 306 and a third portion 308. The first 304, second 306 and third 308 portions are edge portions of the third triangularly shaped battery suspension bracket 302. The third triangularly shaped battery suspension bracket 302 further comprises an elongated vertical member 310, an elongated horizontal member 312 as well as an elongated slanted member 314. The elongated vertical member 310 extends vertically from the first portion 304 to the second portion 306, the elongated horizontal member 312 extends horizontally from the first portion 304 to the third portion 308. The elongated slanted member 314 extends vertically and horizontally from the second portion 306 to the third portion 308.

In a similar vein, the fourth triangularly shaped battery suspension bracket 402 comprises a first portion 404, a second portion 406 and a third portion 408. The first 404, second 406 and third 408 portions are edge portions of the fourth triangularly shaped battery suspension bracket 402. The fourth triangularly shaped battery suspension bracket 402 further comprises an elongated vertical member 410, an elongated horizontal member 412 as well as an elongated slanted member 414. The elongated vertical member 410 extends vertically from the first portion 404 to the second portion 406, the elongated horizontal member 412 extends horizontally from the first portion 404 to the third portion 408. The elongated slanted member 414 extends vertically and horizontally from the second portion 406 to the third portion 408.

Referring back to the third triangularly shaped battery suspension bracket 302. As can be seen in Fig. 3, the third triangularly shaped battery suspension bracket 302 comprises a first battery supporting bushing 311 and a second battery supporting bushing 320. The first 311 and second 320 battery supporting bushings are arranged on the elongated horizontal member 312 between the above described first 304 and second 306 portions. The first 311 and second 320 battery supporting bushings are spaced apart from each other, where the first battery supporting bushing 311 is arranged closer to the first portion 304 compared to second battery supporting bushing 320. The first 311 and second 320 battery supporting bushings are arranged on opposite sides of the third triangularly shaped battery suspension bracket 302 as seen in the longitudinal direction of the vehicle 10. In the exemplification of Fig. 3, the first battery supporting bushing 311 face the fourth triangularly shaped battery suspension bracket 402, while the second battery supporting bushing 320 face the second triangularly shaped battery suspension bracket 202. It should however be readily understood that the first battery supporting bushing 311 may face the second triangularly shaped battery suspension bracket 202 and the second battery supporting bushing 320 may face the fourth triangularly shaped battery suspension bracket 402.

Further, the fourth triangularly shaped battery suspension bracket 402 also comprises a first battery supporting bushing 411 and a second battery supporting bushing 420. The first 411 and second 420 battery supporting bushings are arranged on the elongated horizontal member 412 between the above described first 404 and second 406 portions of the fourth triangularly shaped battery suspension bracket 402. The first 411 and second 420 battery supporting bushings are spaced apart from each other, where the first battery supporting bushing 411 is arranged closer to the first portion 404 compared to second battery supporting bushing 420. The first 411 and second 420 battery supporting bushings are arranged on opposite sides of the fourth triangularly shaped battery suspension bracket 402 as seen in the longitudinal direction of the vehicle 10. In the exemplification of Fig. 3, the first battery supporting bushing 411 face away from the third triangularly shaped battery suspension bracket 302, while the second battery supporting bushing 420 face the third triangularly shaped battery suspension bracket 302. It should however be readily understood that the first battery supporting bushing 411 may face the third triangularly shaped battery suspension bracket 302 and the second battery supporting bushing 420 may face away from the third triangularly shaped battery suspension bracket 302.

Moreover, and in a similar manner as described above, each one of the third 302 and fourth 402 triangularly shaped battery suspension brackets also comprises a frame connecting structure 133. The frame connecting structure 133 may comprise through holes for connecting the respective triangularly shaped battery suspension brackets to the frame 40. For example, bolts, screws or rivets may be used for attaching the frame connecting structure 133 to the frame 40 via corresponding through holes in the frame 40. As can be seen in Fig. 3, each of the triangularly shaped suspension brackets may be formed as a right triangle, and may be of same size and/or shape. Also, each of the triangularly shaped battery suspension bracket may be made of cast iron.

The above described additional first 102', second 202', third 302' and fourth 402' triangularly shaped battery suspension brackets may be arranged in a similar manner as the respective first 102, second 202, third 302 and fourth 402 triangularly shaped battery suspension brackets. Hence, the portions, members and bushings for these additional triangularly shaped battery suspension brackets will not be described further.

Turning now to Fig. 4. As can be seen in Fig. 4, the battery suspension arrangement further comprises a first 142 and second 144 elongated frame. The first elongated frame 142 is connected to the first triangularly shaped battery suspension bracket 102 by the first battery supporting bushing 111. The first elongated frame 142 is also connected to the additional first triangularly shaped battery suspension bracket 102' by a corresponding battery supporting bushing thereof. The second elongated frame 144 is connected to the second triangularly shaped battery suspension bracket 202 by the second battery supporting bushing 220. The second elongated frame 144 is also connected to the additional second triangularly shaped battery suspension bracket 202' by a corresponding battery supporting bushing thereof. As can be seen in Fig. 4, each of the first 142 and second 144 elongated frames comprises a battery support surface 150. The first traction battery (101 in Fig. 2) can hereby be supported by the battery support surface 150 of the first 142 and second 144 elongated frame.

Further, the battery suspension arrangement 100 further comprises a third elongated frame 146 connected to the second triangularly shaped battery suspension bracket 202 on a longitudinally opposite side compared to the position of the second elongated frame 144. The third elongated frame 146 is connected to the second triangularly shaped battery suspension bracket 202 by the first battery supporting bushing 211. A fourth elongated frame is arranged on the third triangularly shaped battery suspension bracket 302 whereby a second traction battery (101^{I} in Fig. 2) can be suspended by corresponding battery support surfaces of the third and fourth elongated frames.

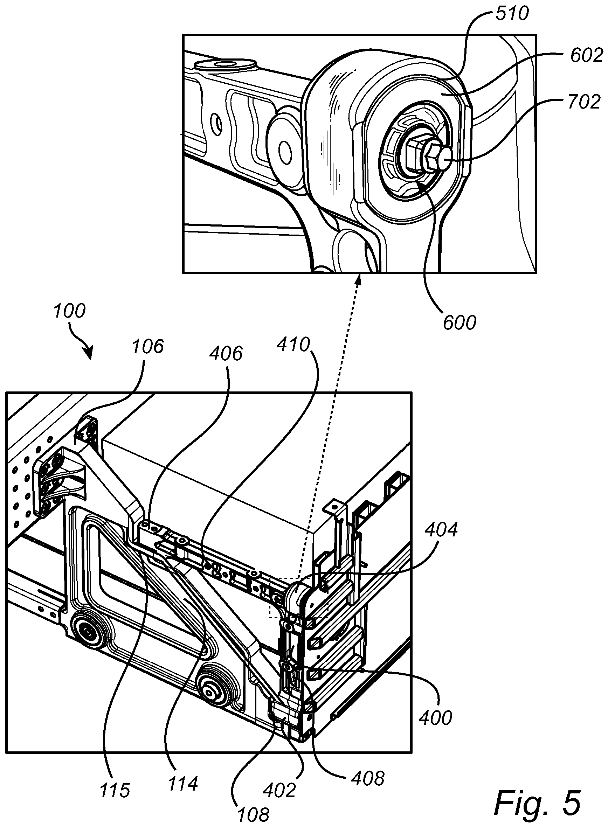

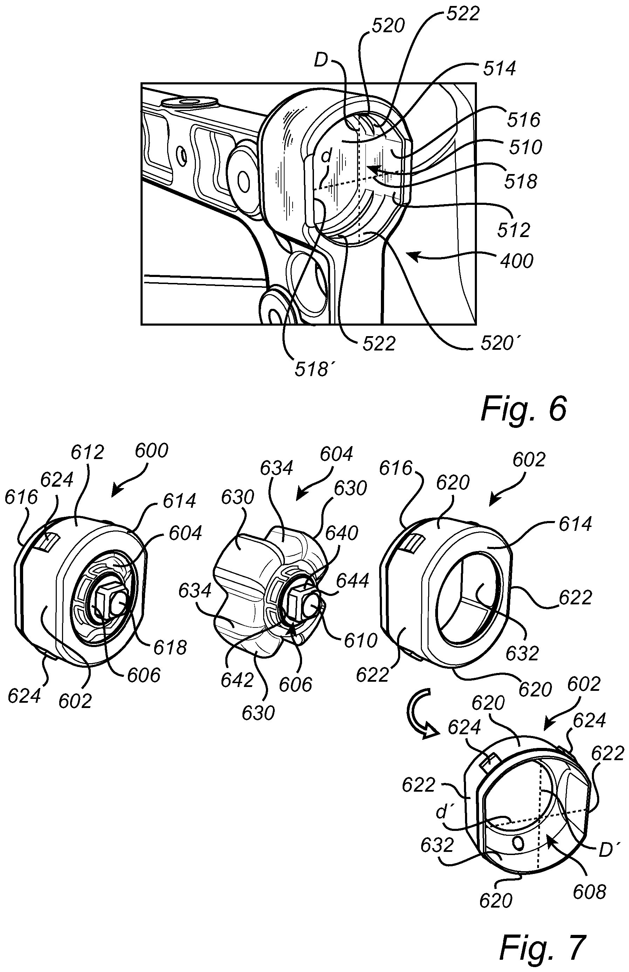

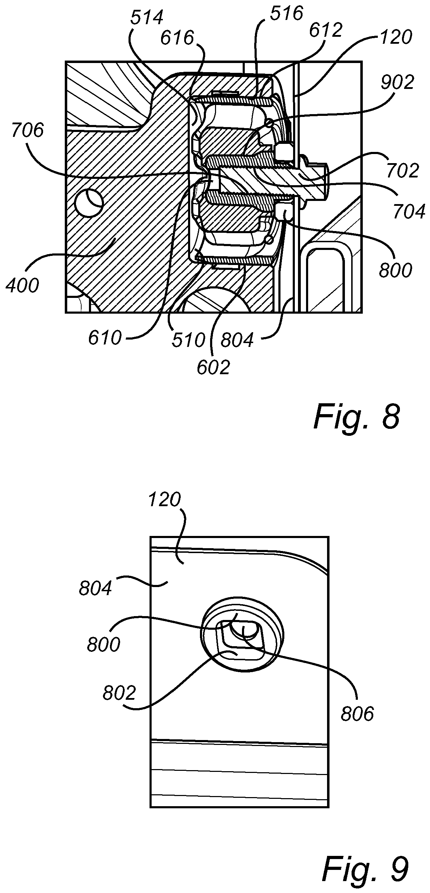

Reference is now made to Figs. 5 - 9 for the purpose of describing exemplary details of the above described protection plate bracket. In particular, Fig. 5 is an exemplary illustration of a protection plate bracket according to an example. Figs. 6 - 8 are exemplary detailed illustrations of the protection plate bracket according to an example, while Fig. 9 is an exemplary illustration of a guiding element connected to the protection plate according to an example.

The following will describe the first protection plate bracket 400 only, which is connected to the first triangularly shaped battery suspension bracket 102. It should however be readily understood that the battery suspension arrangement 100 may comprise a second protection plate bracket connected to the second triangularly shaped battery suspension bracket 202, a third protection plate bracket connected to the third triangularly shaped battery suspension bracket 302, as well as a fourth protection plate bracket connected to the fourth triangularly shaped battery suspension bracket 402. The battery suspension arrangement 100 may additionally also comprise protection plate brackets connected to the respective additional first 102', second 202', third 302' and fourth 402' triangularly shaped battery suspension brackets.

As can be seen in Fig. 5, the first protection plate bracket 400 comprises a first portion 402, a second portion 404, and a third portion 406. The first protection plate bracket 400 further comprises an elongated vertical member 408 and an elongated horizontal member 410. The elongated vertical member 408 extends from the first portion 402 to the second portion 404, while the elongated horizontal member 410 extends from the second portion 404 to the third portion 406. In particular, and as illustrated in Fig. 5, the first portion 402 of the first protection plate bracket 400 is attached to the third portion 108 of the first triangularly shaped battery suspension bracket 102. The third portion 406 of the first protection plate bracket 400 is attached to the slanted member 114 of the first triangularly shaped battery suspension bracket 102. In particular, the third portion 406 of the first protection plate bracket 400 is attached to a connection interface 115 of the slanted member 114, which connection interface 115 is arranged between the second 106 and third 108 portions of the first triangularly shaped battery suspension bracket 102. According to the exemplification in Fig. 5, the elongated vertical member 408 and the elongated horizontal member 410 of the first protection plate bracket 400 may be arranged at right angle relative to each other.

Turning now to Fig. 6, the second portion 404 is depicted in further detail. The second portion 404 is, as indicated above, preferably an upper portion of the first protection plate bracket 400. The first portion 402 is thus preferably a lower portion. The exemplified first protection plate bracket 400 comprises a bracket cavity 510. The bracket cavity 510 is arranged in the second portion 404. Although not depicted, the first protection plate bracket 400 may also comprise a second bracket cavity arranged in the first portion 402. The following features described in relation to the bracket cavity 510 are equally applicable for the second bracket cavity. In a similar vein, the features of the busing arrangement described below are equally applicable for a second bushing arrangement (not shown) arranged in the second bracket cavity.

The bracket cavity 510 exemplified in Fig. 6 comprises an opening 512 and has a horizontal extension in a direction towards the frame 40 of the vehicle 10. The bracket cavity 510 comprises an inner wall 514 and a bracket abutment portion 516. The bracket abutment portion 516 is preferably a surface and exemplified as an oblong shaped portion. In detail, the oblong shaped portion comprises a pair of straight surface portions 518, 518' and a pair of semi-circular surface portions 520, 520'. A maximum distance D between the pair of semi-circular surface portions 520, 520' is preferably larger than a distance d between the pair of straight surface portions 518, 518'. Also, the pair of straight surface portions 518, 518' preferably extends vertically such that the oblong shaped portion is oblong in the vertical direction.

Furthermore, the bracket abutment portion 516 comprises at least one groove portion 522. In the example depicted in Fig. 6, the bracket abutment portion 516 comprises a pair of groove portion 522, each arranged in a respective one of the semi-circular surface portions 520, 520'. The groove portion 522 is preferably arranged at a distance from the opening 512, i.e. between the opening 512 and the inner wall 514. The groove portion 522 extends in an axial- and a radial direction of the respective semi-circular surface portions 520, 520'.

As can be seen in Fig. 5, a bushing arrangement 600 is also provided. As will be evident from the below description and illustration of Fig. 7, the bushing arrangement 600 is arranged to be positioned in the above-described bracket cavity 510. The bushing arrangement 600 comprises a first part 602, a second part 604 and a third part 606. The first 602, second 604 and third 606 parts are thus separate part, preferably made from different materials. According to an example, the first part 602 is made from a plastic material, the second part 604 is made from a rubber material and the third part 606 is made from a metallic material.

The first part 602 comprises a central cavity 608, wherein the second part 604 is arranged inside the central cavity 608 of the first part 602. Preferably, the second part 604 is prevented from any substantial axial, radial and rotation displacement relative to the first part 602. Further, the third part 606 is arranged in the second part 604. According to an example, the second part 604 may advantageously be vulcanized to the third part 606 to provide a substantially fixed interface between these two parts. Still further, and as will be described in further detail below, the third part 606 comprises an aperture 610 arranged to receive a fastener element. Also, the third part 606 may be arranged at a central position 618 of the second part 604.

Moreover, the first part 602 may be arranged as an oblong shaped portion, which shape preferably corresponds to the exemplified oblong shape of the bracket cavity 510. The first part 602 of the bushing arrangement 600 comprises a first abutment portion 612. The first abutment portion 612 is thus in the example an oblong shaped portion. The first abutment portion 612 is exemplified as an envelope surface of the first portion 602. The envelope surface extends circumferentially and between a first axial end 614 and a second axial end 616 of the first portion 602.

In a similar vein as the bracket cavity 510 described above, the oblong shaped portion of the first abutment portion 612 comprises a pair of semi-circular surfaces 620 and a pair of straight surfaces 622. Each of the straight surfaces 622 is arranged between the pair of semi-circular surfaces 620. Also, a maximum distance D' between the pair of semi-circular surfaces 620 is larger than a distance d' between the pair of straight surfaces 622.

Moreover, the first abutment portion 612 may comprise at least one protruding clip portion 624, in Fig. 7 exemplified as four protruding clip portions arranged the semi-circular surfaces 620 of the first abutment portion 612. When the bushing arrangement 600 is inserted into the bracket cavity 510 as depicted in Fig. 5, the protruding clip portions are arranged in the groove portion 522 of the bracket abutment portion 516 in the bracket cavity 510. A snap-fit connection may hereby be provided between the first part 602 and the first protection plate bracket 400 which prevents the first part 602 from being axially displaceable from the bracket cavity 510 without the use of an external force.

With reference to the second part 604. As can be seen in Fig. 7, the second part 604 comprises a second abutment portion 630. When the second part 604 is inserted into the first part 602, the second abutment portion 630 is arranged in abutment with a surface 632 of the first part 602. In particular, the surface 632 of the first part 602 is an inner surface arranged in the central cavity 608 of the first part 602. The inner surface may be arranged in an oblong shape with a pair of semi-circular portions and a pair of straight portions. Also, and as illustrated, the second abutment portion 630 may be arranged on a radially protruding portion 634 of the second portion 604. In Fig. 7, the second portion 604 is exemplified as comprising four radially protruding portion 634 forming a four leaf clover shape. The abutment between the first and second abutment portions causes the second part 604 to be substantially stationary in a rotational direction within the first part 602.

Turning to the third part 606. As can be seen in Fig. 7, the third part 606 comprises a protruding portion 640. The protruding portion 640 protrudes from a side surface 642 of the second part 604. The protruding portion 640 extends in a direction away from the first part 602, in particular in a direction away from the inner wall 514 of the bracket cavity when the bushing arrangement 600 is positioned within the bracket cavity 510. Also, the protruding portion 640 comprises an end portion 644 having a chamfered shape.

Turning now also to Fig 8. The first part 602 is arranged in the bracket cavity 510. In particular, the first part 602 is rotationally fixed to the bracket cavity 510, i.e. the first part 602 cannot rotate within the bracket cavity 510 due to the interaction between the first abutment portion of the first part 602 and the bracket abutment portion of the bracket cavity 510 described above. In further detail, the above described first abutment portion 612 of the first part 602 is arranged in abutment with the bracket abutment portion 516 of the bracket cavity 510. Furthermore, a fastener element 702 connects the protection plate 120 to the first protection plate bracket 400. In detail, the fastener element 702 connects the protection plate 120 to the third part 606 of the bushing arrangement 600, whereby the third part 606 is connected to the second part 604, which second part 604 is arranged in the first part 602 and the first part 602 is arranged in the bracket cavity 510. The fastener element 702 may be a threaded fastener element, such as a screw provided with external threads 704 arranged in meshed connection with internal threads 706 of the aperture 610 of the third part 606. The aperture 610 of the third part 606 may extend into the second part 604 in the axial direction.

Moreover, the third part 606 may be arranged in the second part 604. Preferably, and as depicted, the second part 604 comprises an opening 902, such as a through hole, in which the third part 606 is arranged. As also depicted in Fig. 8, the second axial end 616 of the first part 602 is arranged at the inner wall 514 of the bracket cavity 510 when the bushing arrangement 600 is inserted into the bracket cavity 510.

Turning now to Fig. 9 in combination with the above description. The first protection plate bracket 400 may comprise a guiding element 800. As exemplified in Fig. 9, the guiding element 800 is arranged at an inner surface 804 of the protection plate 120, which inner surface 804 faces the frame 40 of the vehicle 10. The guiding element 800 is hollow and arranged at a through hole 806 of the protection plate 120. When the protection plate 120 is connected to the bushing arrangement 600 as depicted in Fig. 8,the guiding element 800 at least partly enclose the protruding portion 640 of the third part 606. An inner surface 802 of the guiding element 800 is preferably chamfered to meet the chamfered shape of the protruding portion 640 of the third part 606.

### EXAMPLE LIST

Example 1. A battery suspension arrangement for a vehicle, the battery suspension arrangement comprising a pair of triangularly shaped battery suspension brackets spaced apart from each other, each one of the triangularly shaped battery suspension brackets comprising a first, second and third portion, an elongated vertical member extending from the first portion to the second portion, an elongated horizontal member extending from the first portion to the third portion, and an elongated slanted member extending from the second portion to the third portion, each of the triangularly shaped battery suspension brackets being connectable to a frame of the vehicle at the second portion, wherein each of the triangularly shaped battery suspension brackets comprises a first and second battery supporting bushing arranged on the respective elongated horizontal member between the first and third portions, wherein the first battery supporting bushing is arranged closer to the first portion, and facing in an opposite direction, compared to the second battery supporting bushing, wherein the first battery supporting bushing of a first one of the pair of triangularly shaped battery suspension brackets facing in a direction towards a second one of the pair of triangularly shaped battery suspension brackets, and wherein the second battery supporting bushing of the second one of the pair of triangularly shaped battery suspension brackets facing in a direction towards the first one of the pair of triangularly shaped battery suspension brackets.

Example 2. The battery suspension arrangement of example 1, wherein the second portion of each one of the pair of triangularly shaped battery suspension brackets comprises a frame connecting structure for connecting the respective triangularly shaped battery suspension brackets to the frame.

Example 3. The battery suspension arrangement of any one of examples 1 or 2, wherein each one of the triangularly shaped suspension brackets is formed as a right triangle.

Example 4. The battery suspension arrangement of any one of the preceding examples, wherein the pair of triangularly shaped battery suspension brackets are of same size and/or shape.

Example 5. The battery suspension arrangement of any one of the preceding examples, wherein each one of the triangularly shaped suspension brackets is made of cast iron.

Example 6. The battery suspension arrangement of any one of the preceding examples, wherein the battery suspension arrangement further comprises a first and second elongated frame, each one of the first and second elongated frames comprises a battery support surface, wherein the battery support surface of the first and second elongated frame are configured to suspend a first traction battery.

Example 7. The battery suspension arrangement of example 6, wherein the first elongated frame is suspended to the first triangularly shaped battery suspension bracket by the first battery supporting bushing of the first triangularly shaped battery suspension bracket, and the second elongated frame is suspended to the second triangularly shaped battery suspension bracket by the second battery supporting bushing of the second triangularly shaped battery suspension bracket.

Example 8. The battery suspension arrangement of any one of the preceding examples, further comprising a first protection plate bracket, the first protection plate bracket comprising a first portion, a second portion and a third portion, wherein the first protection plate bracket comprises an elongated vertical member extending from the first portion to the second portion, and an elongated horizontal member extending from the second portion to the third portion, wherein the first portion is attached to the third portion of the first triangularly shaped battery suspension bracket and the third portion is attached to the elongated slanted member of the first triangularly shaped battery suspension bracket.

Example 9. The battery suspension arrangement of example 8, wherein the first protection plate bracket comprises a bushing arrangement configured to suspend a protection plate to the first protection plate bracket, the bushing arrangement being arranged at the second portion of the first protection plate bracket.

Example 10. The battery suspension arrangement of example 9, wherein the first protection plate bracket comprises a cavity, the bushing arrangement being arranged in the cavity.

Example 11. The battery suspension arrangement of example 10, wherein the bushing arrangement comprises a first part arranged in, and rotationally fixed to, the bracket cavity, the first part comprising a central cavity, a second part arranged in the central cavity, and a third part arranged in the second part, wherein the third part comprises an aperture configured to receive a fastener element for connecting the protection plate to the first protection plate bracket.

Example 12. The battery suspension arrangement of example 11, wherein the first part of the bushing arrangement comprises a first abutment portion arranged in abutment with a bracket abutment portion of the bracket cavity.

Example 13. The battery suspension arrangement of any one of examples 8-12, wherein the elongated vertical member and the elongated horizontal member of the first protection plate bracket are arranged at right angle relative to each other.

Example 14. The battery suspension arrangement of any one of the preceding examples, further comprising a third triangularly shaped battery suspension bracket spaced apart from the second one of the pair of triangularly shaped battery suspension brackets such that the second one of the pair of triangularly shaped battery suspension brackets is arranged between the first one of the pair of triangularly shaped battery suspension brackets and the third triangularly shaped battery suspension bracket.

Example 15. The battery suspension arrangement of example 14, wherein the third triangularly shaped battery suspension bracket comprises a first, second and third portion, an elongated vertical member extending from the first portion to the second portion, an elongated horizontal member extending from the first portion to the third portion, and an elongated slanted member extending from the second portion to the third portion, the third triangularly shaped battery suspension bracket being connectable to the frame of the vehicle at the second portion.

Example 16. The battery suspension arrangement of example 15, wherein the third triangularly shaped battery suspension bracket comprises a first and second battery supporting bushing arranged on the elongated horizontal member between the first and third portions, wherein the first battery supporting bushing is arranged closer to the first portion, and facing in an opposite direction, compared to the second battery supporting bushing.

Example 17. The battery suspension arrangement of example 16, wherein the first battery supporting bushing of the second one of the pair of triangularly shaped battery suspension brackets facing in a direction towards third triangularly shaped battery suspension bracket, and wherein the second battery supporting bushing of the third triangularly shaped battery suspension bracket facing in a direction towards the second one of the pair of triangularly shaped battery suspension brackets.

Example 18. The battery suspension arrangement of any one of the preceding examples, wherein the pair of triangularly shaped battery suspension brackets being a first pair of triangularly shaped battery suspension brackets, the battery suspension arrangement further comprising a second pair of triangularly shaped battery suspension brackets spaced apart from each other, wherein the first and second pair triangularly shaped battery suspension brackets being connectable to a respective longitudinally extending frame rail of the frame of the vehicle.

Example 19. An energy storage arrangement, comprising a traction battery and a battery suspension arrangement of any one of the preceding examples, wherein the traction battery is supported by the pair of triangularly shaped battery suspension brackets.

Example 20. A vehicle comprising the battery suspension arrangement of any one of examples 1 - 18, or the energy storage arrangement of example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a vehicle, the battery suspension arrangement comprising a pair of triangularly shaped battery suspension brackets (102, 202) spaced apart from each other, each one of the triangularly shaped battery suspension brackets comprising a first (104, 204), second (106, 206) and third (108, 208) portion, an elongated vertical member (110, 210) extending from the first portion (104, 204) to the second portion (106, 206), an elongated horizontal member (112, 212) extending from the first portion (104, 204) to the third portion (108, 208), and an elongated slanted member (114, 214) extending from the second portion (106, 206) to the third portion (108, 208), each of the triangularly shaped battery suspension brackets being connectable to a frame (40) of the vehicle at the second portion (106, 206), wherein each of the triangularly shaped battery suspension brackets comprises a first (111, 211) and second (120, 220) battery supporting bushing arranged on the respective elongated horizontal member (112, 212) between the first and third portions, wherein the first battery supporting bushing (111, 211) is arranged closer to the first portion (104, 204), and facing in an opposite direction, compared to the second battery supporting bushing (120, 220),
wherein the first battery supporting bushing (111) of a first one (102) of the pair of triangularly shaped battery suspension brackets facing in a direction towards a second one (202) of the pair of triangularly shaped battery suspension brackets, and wherein the second battery supporting bushing (220) of the second one (202) of the pair of triangularly shaped battery suspension brackets facing in a direction towards the first one (102) of the pair of triangularly shaped battery suspension brackets.

2. The battery suspension arrangement of claim 1, wherein the second portion (106, 206) of each one of the pair of triangularly shaped battery suspension brackets comprises a frame connecting structure (133) for connecting the respective triangularly shaped battery suspension brackets to the frame (40).

3. The battery suspension arrangement of any one of the preceding claims, wherein the battery suspension arrangement further comprises a first (142) and second (144) elongated frame, each one of the first (142) and second (144) elongated frames comprises a battery support surface (150), wherein the battery support surface of the first and second elongated frame are configured to suspend a first traction battery.

4. The battery suspension arrangement of claim 3, wherein the first elongated frame (142) is suspended to the first triangularly shaped battery suspension bracket (102) by the first battery supporting bushing (111) of the first triangularly shaped battery suspension bracket, and the second elongated frame (144) is suspended to the second triangularly shaped battery suspension bracket (202) by the second battery supporting bushing (220) of the second triangularly shaped battery suspension bracket.

5. The battery suspension arrangement of any one of the preceding claims, further comprising a first protection plate bracket (400), the first protection plate bracket comprising a first portion (402), a second portion (404) and a third portion (406), wherein the first protection plate bracket comprises an elongated vertical member (408) extending from the first portion (402) to the second portion (404), and an elongated horizontal member (410) extending from the second portion (404) to the third portion (406), wherein the first portion (402) is attached to the third portion (108) of the first triangularly shaped battery suspension bracket (102) and the third portion (406) is attached to the elongated slanted member (114) of the first triangularly shaped battery suspension bracket.

6. The battery suspension arrangement of claim 5, wherein the first protection plate bracket comprises a bushing arrangement configured to suspend a protection plate to the first protection plate bracket, the bushing arrangement being arranged at the second portion of the first protection plate bracket.

7. The battery suspension arrangement of claim 6, wherein the first protection plate bracket comprises a cavity, the bushing arrangement being arranged in the cavity.

8. The battery suspension arrangement of claim 7, wherein the bushing arrangement comprises a first part arranged in, and rotationally fixed to, the bracket cavity, the first part comprising a central cavity, a second part arranged in the central cavity, and a third part arranged in the second part, wherein the third part comprises an aperture configured to receive a fastener element for connecting the protection plate to the first protection plate bracket.

9. The battery suspension arrangement of any one of the preceding claims, further comprising a third triangularly shaped battery suspension bracket (302) spaced apart from the second one of the pair of triangularly shaped battery suspension brackets such that the second one of the pair of triangularly shaped battery suspension brackets is arranged between the first one of the pair of triangularly shaped battery suspension brackets and the third triangularly shaped battery suspension bracket.

10. The battery suspension arrangement of claim 9, wherein the third triangularly shaped battery suspension bracket comprises a first, second and third portion, an elongated vertical member extending from the first portion to the second portion, an elongated horizontal member extending from the first portion to the third portion, and an elongated slanted member extending from the second portion to the third portion, the third triangularly shaped battery suspension bracket being connectable to the frame of the vehicle at the second portion.

11. The battery suspension arrangement of claim 10, wherein the third triangularly shaped battery suspension bracket (302) comprises a first (310) and second (320) battery supporting bushing arranged on the elongated horizontal member between the first and third portions, wherein the first battery supporting bushing is arranged closer to the first portion, and facing in an opposite direction, compared to the second battery supporting bushing.

12. The battery suspension arrangement of claim 11, wherein the first battery supporting bushing (211) of the second one (202) of the pair of triangularly shaped battery suspension brackets faces in a direction towards third triangularly shaped battery suspension bracket (302), and wherein the second battery supporting bushing (320) of the third triangularly shaped battery suspension bracket (302) faces in a direction towards the second one (202) of the pair of triangularly shaped battery suspension brackets.

13. The battery suspension arrangement of any one of the preceding claims, wherein the pair of triangularly shaped battery suspension brackets being a first pair of triangularly shaped battery suspension brackets, the battery suspension arrangement further comprising a second pair of triangularly shaped battery suspension brackets spaced apart from each other, wherein the first and second pair triangularly shaped battery suspension brackets being connectable to a respective longitudinally extending frame rail of the frame of the vehicle.

14. An energy storage arrangement (1000), comprising a traction battery and a battery suspension arrangement of any one of the preceding claims, wherein the traction battery is supported by the pair of triangularly shaped battery suspension brackets.

15. A vehicle comprising the battery suspension arrangement of any one of claims 1 - 13, or the energy storage arrangement of claim 14.
